# EUROPEAN PATENT APPLICATION

(11) **EP 1 695 929 A1**
(43) Date of publication of application: **30.08.2006**
(21) Application number: 05075469.6
(22) Date of filing: 25.02.2005
(51) Int. Cl.: B65G 59/10

(54) **Tray destacker**

(71) Applicant: Van der Laan, Paulus Maria, 2461 EX Ter Aar (NL)
(72) Inventor: Van der Laan, Paulus Maria, 2461 EX Ter Aar (NL)
(74) Representative: Lips, Hendrik Jan George

(57) **Abstract**

The invention relates to an improved tray-destacker (2), which is situated with an interspace, which is an ample tray-height, above a first conveyor belt (14), in which the tray-destacker (2) is constructed as a vertical U-shaped frame (3) with supporting strips (4) and supporting casing (5), in which in the mentioned supporting casing a vertical portal-shaped construction (11) with up and down moveable telescopic blade edges (9) and supporting edges (7) unstacks the pile of stacked trays, in which the mentioned unstacking of the pile of trays (6) is executed in a systematically and electronically controlled manner on the first conveyor belt (14).

## Description

The present invention relates to a device for destacking stacked trays and/or plastic cases on top of a conveyor belt, on which the trays will then be laid at an equal mutual distance, in short a tray-destacker or tray-unstacker, after which the trays are further onwards separately filled with horticultural products, such as, for example, potted plants.

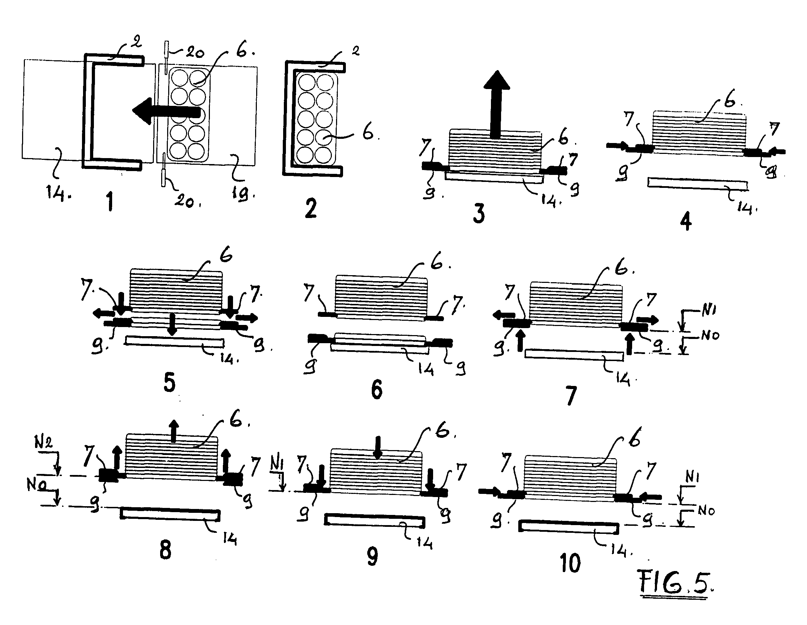

Devices for destacking stacked trays or shallow preshaped cases for, e.g. potted plants are known in different rudimentary or imperfect embodiments, in which often the following systems are used:
- System A
   Every time the pile of stacked trays is completely lifted minus the bottom tray, in which the bottom tray falls off onto the conveyor belt.
   The disadvantage is mostly, that the bottom tray is caught or sticks to the pile of trays and sometimes partly releases. With the next tray, for example, the same problem occurs and finally a number of trays, still partly stuck together, fall onto the conveyor belt, after which the whole must be corrected manually, leading to time loss and such.
- System B
   The pile of stacked trays stays on the conveyor belt. Next, the whole stack of trays besides the bottom tray is lifted, etc.
   The disadvantage is, that the bottom tray is caught and/or sticks to the pile and is therefore not released, through which the whole destacking process is disturbed.
   The aforementioned shows that the known tray-destackers have a number of disadvantages for a well performed constant operation cycle.
   It is the aim of the present invention to provide such an improved tray-destacker, in which the aforementioned disadvantages are solved and which device can be put onto the market in an economically responsible way.
   For this, a device for unstacking trays on top of a first conveyor belt according to the invention is further developed in such a way, that the mentioned tray-destacker is mounted at ample tray height above a first conveyor belt and is constructed of an open top side U-sahped frame provided with vertical guiding strips and casing with tray-dependant dimensions LxWxH, in which in the legs of the U-shaped frame specific lifting instruments for destacking the stack of trays are applied, in which elements of the specific lifting instruments are always coupled to the bottom tray, in which this tray is then forced onto the first conveyor belt and the other elements of the lifting instrument keep the rest of the stacked trays at a suitable height above the first conveyor belt.
   The advantage is, that an undisturbed operation cycle is executed, for the bottom tray is pulled from the stack and is forced downwards towards the conveyor belt.
   Furthermore, the device according to the invention is further developed in such a way, that the mentioned lifting instrument in the legs of the U-shaped frame are constructed of a vertical portal-shaped construction, which is placed with its centre on a horizontal joist via a pair of cylinders with piston and telescopic piston rod and with that the portal-shaped construction moves up and down in a specific way to execute the procedure of destacking the stack of trays of claim 9.
   The advantage is, that by means of the specific action of the piston rods of the cylinders the bottom tray can each time be separated from the lifted pile of stacked trays.
   Furthermore, the device according to the invention is further developed in such a way, that the mentioned driven pair of cylinders with piston and piston rod are connected to each other via the fixed bottom side and in which the cylinders have an unequal stroke length of the piston rod, in which the piston rod of the top cylinder has a long stroke S1 and the bottom cylinder has a short stroke S2 in order to lift the mentioned vertical portal-shaped construction from level 0 (N0) to level 1 (N1), to level 2 (N2) respectively for the unstacking procedure of the trays, in which heads or blocks with telescopic knife edges are applied at the feet of the legs of the vertical portal-shaped construction, and a head or block with telescopic supporting edge for supporting the middle edge of the stack of trays is applied below the mentioned horizontal joist.
   The advantages are, that with the aid of the coupled cylinders, in which the heads with supporting edges and blade edges work constantly on the pile of stacked trays, so that each time the bottom tray with the blade edges in the corners of the tray is led towards the conveyor belt situated below, in which the supporting and blade edges can each time be slided inwards and outwards from the mentioned heads, through which the release of the bottom tray and the clamping of the remaining pile of stacked trays is executed in a very balanced way.
   Furthermore, the work method for executing the electronically controlled destacking of the pile of stacked trays according to the invention, is characterized in that, the mentioned specific process is executed in maximally 10 steps, indicated in figure 5, being:
   1. Stack of trays is put into the destacker at level 0 (N0), which can be done automatically or manually.
   2. Stack of trays is located at level 0 (N0) in the tray-destacker.
   3. Stack of trays is lifted to level 1 (N1) with the lifting instrument.
   4. Stack of trays is located at level 1 (N1) and the supporting edges and blade edges of the lifting instrument are placed between the edges of the bottom and the last bottom tray but one.
   5. Now, the slided out blade edges forceably move to level 0 (N0) with the bottom tray.
   6. On the way from N1 to N0 the slided out blade edges are retracted.
   7. The blade edges of the lifting instrument are retracted in the matching blocks and move to level 1 (N1), in which the supporting edges are slided out and the blade edges are retracted.
   8. The lifting instrument moves to level 2 (N2) with the stack of trays and with that the blade edges are retracted, on the way from N1 to N2 the supporting edges retract.
   9. The lifting instrument now descends to level 1 (N1), at level 1 (N1) the supporting edges and blade edges slide out and are then located between the edges of the bottom and the last bottom tray but one.
   10. Now, the slided out blade edges go to level 0 (N0) with the bottom tray and the cycle continues with step 6 up to 10, etc.
   The advantage is, that for every type of tray the level differences 0, 1 and 2 are optimally adjustable, through which every time steps 1 up to 10 are run and then every time steps 6 up to 10, until the whole pile of stacked trays is processed.
   The preferred construction of the invention will be described by way of example, and with reference to the accompanying drawing.
   In which:
   - Fig. 1: shows a horizontal cross-section of the improved tray-destacker according to a preferred embodiment of the invention;
   - Fig. 2: shows a vertical cross-section over the line II-II of figure 1 with the tray-destacker in the starting position at level 0 (N0);
   - Fig. 3: ditto as in figure 2, but now the tray-destacker is positioned at level 1 (N1);

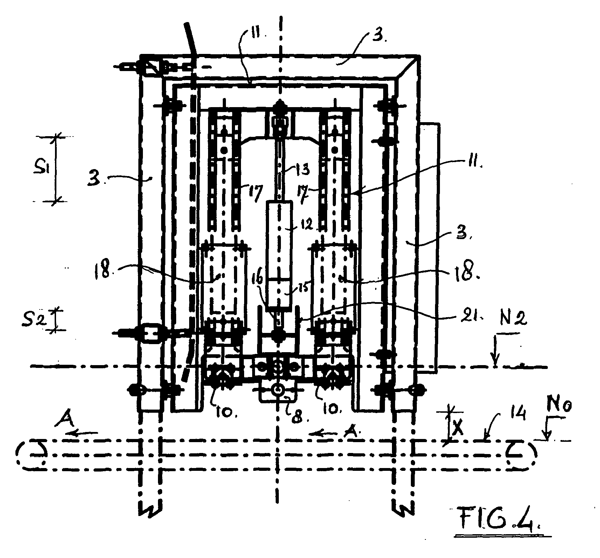

   - Fig. 4: ditto as in figures 2 and 3, but now the tray-destacker is positioned at level 2 (N2); and
   - Fig. 5: shows an operation cycle with steps for executing the work method for unstacking the pile of stacked trays according to a preferred embodiment of the invention.

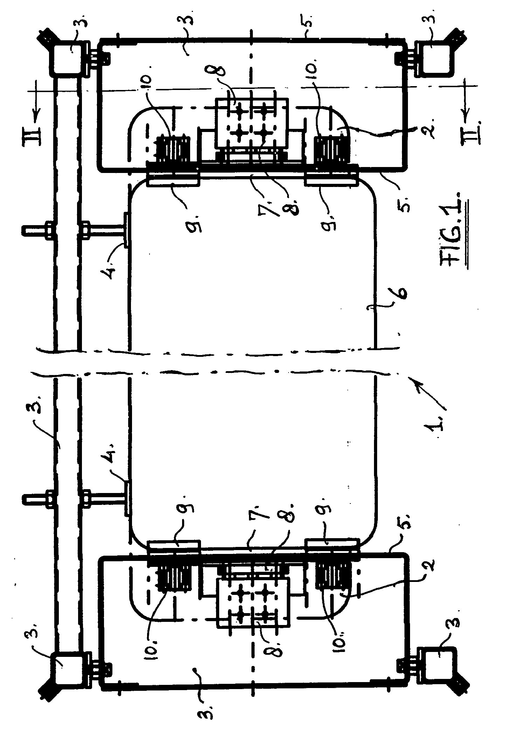

   In figure 1 with 1 the horizontal cross-section of the improved tray-destacker 2 is indicated. The destacker 2 is constructed as a vertical U-shaped frame 3, in which in vertical sense guiding strips 4 are mounted onto the body of the U-shaped frame 3 and a guiding case 5 is mounted onto its legs. The indicated pile of trays 6 rest on the telescopic supporting edges 7 protruding from the heads 8 and the bottom tray is placed with the telescopic blade edges 9 protruding from the heads or blocks 10, which in short are called lifting instruments and are further worked out below, is forced downwards onto the conveyor belt.

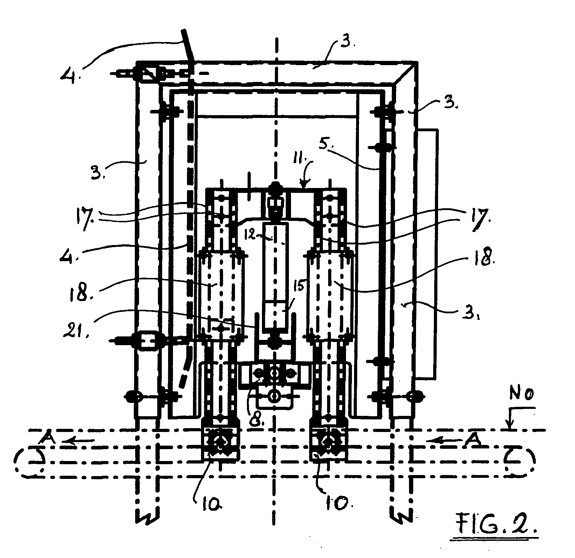

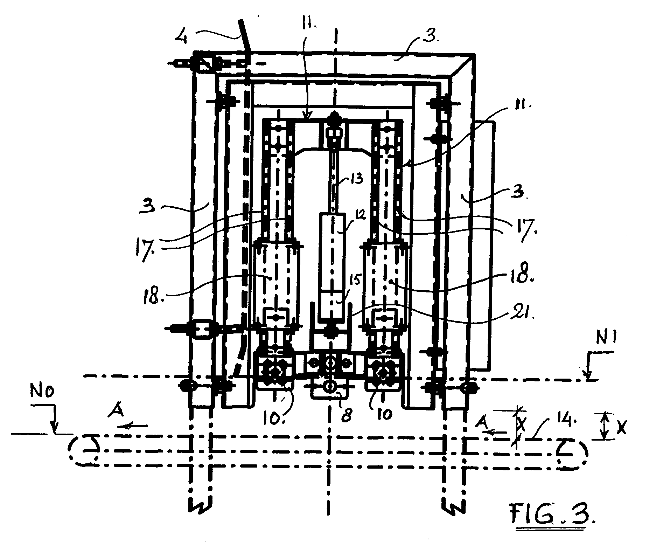

   Figure 2 shows a vertical cross-section along the line II-II of figure 1 with a tray-destacker 2 in the starting position (N0) or level 0. The vertical portal-shaped construction 11 is moved up and down by a top cylinder 12 with piston and long piston rod 13 with stroke length S1 (see also figure 3) from and to level N1.
   At level N1 the telescopic blade edges 9 are brought in the corners of the bottom tray of the pile of trays 6. The interspace X is taken somewhat larger than the individual tray height above the first conveyor belt 14. Hereafter the telescopic supporting edges 7 are brought underneath the edge of the bottom tray 6 but one. The destacking procedure is described in claim 9 in the steps 1 up to 10. Further, the bottom cylinder 15 with short piston rod 16 with stroke length S2 can slide out and with that pulls with the retracted supporting edges 7 the pile of trays to level N2. Futhermore, the long piston rod 13 and the short piston rod 16, according to the steps of claim 9, can be retracted and slided out according to one's needs and the bottom tray 6 with the telescopic blade edges 9 ends up on the first conveyor belt 14, which moves in direction A (see figure 2). The legs 17 of the vertical portal-shaped construction 11 are led through the supporting blocks 18 for a stable and evenly moving up and down of the portal-shaped construction 11 (see figures 2 up to 4).
   Figure 5 shows a schematic operation cycle for the steps 1 up to 10 for destacking the pile of stacked trays 6. In step 1 the pile of trays moves from the second conveyor belt 19, which is possibly secured with detaining levers 20 provided with sensors, in order to start working when the new pile of trays needs to be slided onto the first conveyor belt 14 in the U-shaped frame 3 of the tray-destacker. In step 2 this process is completed. In the next steps 3 up to 10 the removal of the bottom tray 6 from the pile of trays 6 is schematically shown by the sliding in and out of the telescopic blade edges 9 and the telescopic supporting edges 7. The action of the top and bottom cylinders 12 and 15 is also shown in this scheme. The first time steps 1 up to 10 are run and the subsequent times the steps 6 up to 10 are run. Claim 9 shows an example of the steps for destacking the pile of stacked trays onto the first conveyor belt 14.
   Finally it has to be emphasized, that the above description constitutes a preferred embodiment of the invention and that further variations and modifications are still possible without departing the scope of this patent description.

## Claims

1. Device for destacking stacked trays (6) and/or plastic cases on top of a conveyor belt, on which the trays will then be laid at an equal mutual distance, called in short a tray-destacker or tray-unstacker (2), after which the trays are further onwards separately filled with horticultural products, such as, for example, potted plants, **characterized in that**, the mentioned tray-destacker (2) is mounted at ample tray height above a first conveyor belt (14) and is constructed of an open topside U-shaped frame (3) with vertical guiding strips and casing (4, 5) with tray-dependant dimensions LxWxH, in which in the legs of the U-shaped frame (3) specific lifting instruments for destacking the stack of trays (6) are applied, in which elements of the specific lifting instruments are always coupled to the bottom tray (6), in which this tray (6) is then forced onto the first conveyor belt (14) and with other elements of the lifting instrument the rest of the stacked trays (6) are kept at a suitable height above the first conveyor belt (14).

2. Device as claimed in claim 1, **characterized in that**, the mentioned lifting instrument in the legs of the U-shaped frame (3) are constructed of a vertical portal-shaped construction (11), which is placed with its centre on a horizontal joist (21) via a pair of cylinders (12, 15) with piston and telescopic piston rod (13, 16) and with that the portal-shaped construction (11) moves up and down in a specific way to execute the procedure of destacking the stack of trays (6) of claim 9.

3. Device as claimed in claim 2, **characterized in that**, the mentioned driven pair of cylinders (12, 15) with piston and piston rod (13, 16) are connected to each other via the fixed bottom side and in which the cylinders (12, 15) have an unequal stroke length of the piston rod (13, 16), in which the piston rod (13) of the top cylinder has a long stroke S1 and the bottom cylinder has a short stroke S2 in order to lift the mentioned vertical portal-shaped construction (11) from level 0 (N0) to level 1 (N1), to level 2 (N2) respectively for the unstacking procedure of the trays (6) indicated according to the steps 1 up to 10 of claim 9.

4. Device as claimed in claims 2 and 3, **characterized in that**, on the vertical portal-shaped construction (11), heads or blocks (10) with telescopic knife edges (9) are applied at the feet of the legs (17) and a head or block (8) with telescopic supporting edge (7) for supporting the middle edge of the stack of trays (6) is applied below the mentioned horizontal joist (21).

5. Device as claimed in claim 4, **characterized in that**, the legs (17) of the vertical portal-shaped construction (11) partly run through guiding blocks (18) for a well performed and stable operation cycle.

6. Device as claimed in claim 1, **characterized in that**, in front of the tray-destacker (2) above a first conveyor belt (14) firstly a second conveyor belt (19) is placed for feeding stacks of trays (6), which, possibly with detaining levers (20) provided with sensors, feed stacks of trays (6) to the tray-destacker (2).

7. device as claimed in aforementioned claims, **characterized in that**, the mentioned destacker (2) is electronically controlled by means of, for example, a PLC-control and that the pistons of the cylinders (12, 15) are moveable pneumatically or manually.

8. Device as claimed in aforementioned claims, **characterized in that**, the dimensions LxWxH of the U-shaped destacker (2) for unstacking the stack of trays (6) for potted plants, for example, are approximately (chosen width of the tray + 400mm)x500x600mm, in which the width of the mentioned first and/or second conveyor belt (14, 19) is often the maximum width of the tray (6).

9. Work method for electronically controlled executing the specific process of unstacking trays (6) with the destacker (2) according to claims 1-7, **characterized in that**, the mentioned specific process is executed in maximally 10 steps, indicated in figure 5, being:
1. Stack of trays is put into the destacker (2) at level 0 (N0), which can be done automatically or manually.
2. Stack of trays (6) is located at level 0 (N0) in the tray-destacker (2).
3. Stack of trays (6) is lifted to level 1 (N1) with the lifting instrument.
4. Stack of trays (6) is located on level 1 (N1) and the supporting edges (7) and blade edges (9) of the lifting instrument are placed between the edges of the bottom and the last bottom tray (6) but one.
5. Now, the slided out blade edges (9) forceably move to level 0 (N0) with the bottom tray (6).
6. On the way from N1 to N0 the slided out blade edges (9) are retracted.
7. The blade edges (9) of the lifting instrument are retracted in the matching blocks (10) and move to level 1 (N1), in which the supporting edges (7) are slided out and the blade edges (9) are retracted.
8. The lifting instrument moves to level 2 (N2) with the stack of trays (6) and with that the blade edges (9) are retracted, on the way from N1 to N2 the supporting edges retract.
9. The lifting instrument now descends to level 1 (N1), at level 1 (N1) the supporting edges (7) and blade edges (9) slide out and are then located between the edges of the bottom and the last bottom tray (6) but one.
10. Now, the slided out blade edges (9) go to level 0 (N0) with the bottom tray (6) and the cycle continues with step 6 up to 10, etc.
